# EUROPEAN PATENT APPLICATION

(11) **EP 2 667 617 A2**
(43) Date of publication of application: **27.11.2013**
(21) Application number: 13168467.2
(22) Date of filing: 21.05.2013
(51) Int. Cl.: H04N 13/00

(54) **Video signal processing apparatus**

(30) Priority: 22.05.2012 JP 2012116476
(71) Applicant: Funai Electric Co., Ltd., Daito-shi Osaka 574-0013 (JP)
(72) Inventor: Shimizu, Yoshiharu, Daito-shi, Osaka 574-0013 (JP)
(74) Representative: Grünecker, Kinkeldey, Stockmair & Schwanhäusser

(57) **Abstract**

A video signal processing apparatus includes a three-dimensional video image parallax detector, a superimposed video image parallax setter, a superimposed video image parallax giver, and a video signal synthesis processor. The three-dimensional video image parallax detector detects the parallax in three-dimensional video images from a left-eye three-dimensional video signal and a right-eye three-dimensional video signal. The superimposed video image parallax setter sets the parallax in a three-dimensional superimposed video image to be superimposed upon three-dimensional video images to a parallax greater than the three-dimensional video image parallax. The superimposed video image parallax giver generates a left-eye superimposed video signal and a right-eye superimposed video signal from the superimposed video signal so as to have the set superimposed video image parallax. The video signal synthesis processor generates a left-eye synthesized video signal generated by synthesizing the left-eye three-dimensional video signal and the left-eye superimposed video signal and a right-eye synthesized video signal generated by synthesizing the right-eye three-dimensional video signal and the right-eye superimposed video signal.

## Description

### BACKGROUND OF THE INVENTION

### 1. Field of the Invention

The present invention relates to a video signal processing apparatus which is provided in a video display apparatus such as a television receiver or projector and which processes video signals to display three-dimensional video images.

### 2. Description of the Related Art

In video display apparatuses, there have traditionally been those which display three-dimensional video images. A three-dimensional video image is a video image that is made to appear stereoscopic (made to appear three-dimensional so as to have a sense of depth) to an observer by displaying a left-eye image to be observed by the left eye of the observer and a right-eye image to be observed by the right eye of the observer and generating a parallax between the left-eye and right-eye images.

In such a video display apparatus that displays three-dimensional video images, superimposed video images such as a caption display and on-screen display (OSD) which are superimposed upon three-dimensional video images also include superimposed video images which are made to appear stereoscopic to observers by displaying a left-eye image and a right-eye image and generating a parallax between the left-eye image and the right-eye image for each of the superimposed video images.

Meanwhile, video signal processing systems have been known in which, on the transmission side of video signals, the parallax between the left-eye image and the right-eye image for a superimposed video image is set, a left-eye video signal and a right-eye video signal are generated such that the left-eye image and the right-eye image for the superimposed video image have the set parallax, the left-eye and right-eye video signals are transmitted, and on the reception side of video signals, the left-eye image and the right-eye image based on the received left-eye video signal and right-eye video signal are displayed, thus making the superimposed video image appear stereoscopic (for example, see International Laid-Open Publication No. 2011/001853).

Furthermore, video signal processing apparatuses have been known in which, when an object is superimposed upon three-dimensional images, the degree of transparency of the object is varied on the basis of the parallax in the region where the object is disposed (for example, see Japanese Patent Publication No. 4693900).

### SUMMARY OF THE INVENTION

When a superimposed video image is displayed so as to appear stereoscopic, the important task is that the superimposed video image is displayed so as to avoid giving observers a sense of incongruity.

In view of the problems described above, preferred embodiments of the present invention provide a video signal processing apparatus which displays superimposed video images without giving a sense of incongruity to observers of the video images by displaying three-dimensional superimposed video images which are superimposed upon three-dimensional video images so as to appear in front of the three-dimensional video images.

According to a preferred embodiment of the present invention, a video signal processing apparatus processes video signals to display three-dimensional video images and includes a superimposed video image parallax setter which sets the parallax between the left-eye image and the right-eye image in a three-dimensional superimposed video image to be superimposed upon three-dimensional video images to a parallax greater than the parallax between the left-eye image and the right-eye image in the three-dimensional video images.

The video signal processing apparatus preferably includes a three-dimensional video image parallax detector which detects the parallax between the left-eye image and the right-eye image in the three-dimensional video images from a left-eye three-dimensional video signal to display the left-eye image and a right-eye three-dimensional video signal to display the right-eye image in the three-dimensional video images, and the superimposed video image parallax setter sets the parallax between the left-eye image and the right-eye image in the three-dimensional superimposed video image to a parallax greater than the parallax between the left-eye image and the right-eye image in the three-dimensional video images detected by the three-dimensional video image parallax detector.

The video signal processing apparatus preferably includes a three-dimensional video image parallax giver which generates a left-eye three-dimensional video signal to display the left-eye image and a right-eye three-dimensional video signal to display the right-eye image in the three-dimensional video images, and a three-dimensional video image parallax determiner which determines the parallax between the left-eye image and the right-eye image in the three-dimensional video images when the left-eye three-dimensional video signal and right-eye three-dimensional video signal are generated by the three-dimensional video image parallax giver, and the superimposed video image parallax setter sets the parallax between the left-eye image and the right-eye image in the three-dimensional superimposed video image to a parallax greater than the parallax between the left-eye image and the right-eye image in the three-dimensional video images determined by the three-dimensional video image parallax determiner.

The three-dimensional video image parallax detector preferably extracts contours of the left-eye image and contours of the right-eye image in the three-dimensional video images and detects the parallax between the left-eye image and the right-eye image in the three-dimensional video images on the basis of an offset between the extracted contours.

The three-dimensional video image parallax detector preferably performs subtraction between the left-eye image and the right-eye image in the three-dimensional video images and detects the parallax between the left-eye image and the right-eye image in the three-dimensional video images on the basis of the breadth of the interval over which the results of the subtraction are continuously positive or negative values for a stipulated value or more.

The three-dimensional video image parallax detector preferably detects motion vectors between the left-eye image and the right-eye image in the three-dimensional video images and detects the parallax between the left-eye image and the right-eye image in the three-dimensional video images on the basis of the amount of motion in the horizontal direction exhibited by the detected motion vectors.

The superimposed video image parallax setter preferably sets the parallax between the left-eye image and the right-eye image in the three-dimensional superimposed video image to a parallax greater than the maximum parallax between the left-eye image and the right-eye image in the three-dimensional video images within the video image display frame.

In a case in which the maximum parallax between the left-eye image and the right-eye image in the three-dimensional video images becomes smaller than the parallax up until then, the superimposed video image parallax setter preferably sets the parallax between the left-eye image and the right-eye image in the three-dimensional superimposed video image to be gradually smaller than the parallax up until then with the passage of time.

The superimposed video image parallax setter preferably increases or decreases the parallax between the left-eye image and the right-eye image in the three-dimensional superimposed video image in accordance with the operation of a control unit.

In the case of the display of a plurality of the three-dimensional superimposed video images, the superimposed video image parallax setter preferably sets the parallax between the left-eye image and the right-eye image in the three-dimensional superimposed video image for each of the plurality of three-dimensional superimposed video images to a different parallax for each three-dimensional superimposed video image.

The superimposed video image parallax setter preferably switches the parallax between the left-eye image and the right-eye image in the three-dimensional superimposed video image for each of the plurality of three-dimensional superimposed video images from the parallax to a different parallax up until then in accordance with the operation of a control unit.

According to various preferred embodiments of the present invention, the left-eye image and the right-eye image in a three-dimensional superimposed video image to be superimposed upon three-dimensional video images are displayed so as to have a parallax greater than the parallax between the left-eye image and the right-eye image in the three-dimensional video images. Accordingly, the three-dimensional superimposed video image is displayed so as to appear to jump out in front of the three-dimensional video images. Consequently, the three-dimensional superimposed video image can be prevented from being buried in the three-dimensional video images, thus making it possible to avoid giving a sense of incongruity to the observer of video images.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is an explanatory diagram illustrating three-dimensional video images according to preferred embodiments of the present invention.

FIG. 2 is an electrical block configuration diagram showing a schematic configuration of a video signal processing apparatus according to a first preferred embodiment of the present invention.

FIGS. 3A-3C are explanatory diagrams illustrating the detection of three-dimensional video image parallax by the three-dimensional video image parallax detector of a video signal processing apparatus according to the first preferred embodiment of the present invention.

FIG. 4 is a flowchart illustrating the setting of superimposed video image parallax by the superimposed video image parallax setter of a video signal processing apparatus according to the first preferred embodiment of the present invention.

FIG. 5 is an explanatory diagram illustrating the generation of a left-eye superimposed video signal and a right-eye superimposed video signal by the superimposed video image parallax giver of a video signal processing apparatus according to the first preferred embodiment of the present invention.

FIG. 6 is an electrical block configuration diagram showing a schematic configuration of the video signal processing apparatus according to a second preferred embodiment of the present invention.

FIG. 7 is an electrical block configuration diagram showing the principal configuration of the video signal processing apparatus according to a third preferred embodiment of the present invention.

FIG. 8 is an electrical block configuration diagram showing the principal configuration of the video signal processing apparatus according to a fourth preferred embodiment of the present invention.

### DETAILED DESCRIPTION OF THE PREFERRED EMBODIMENTS

The video signal processing apparatus according to preferred embodiments of the present invention will be described below with reference to figures.

The video signal processing apparatus according to preferred embodiments of the present invention will be described below with reference to the attached drawing figures. The video signal processing apparatus according to a preferred embodiment of the present invention is an apparatus which is preferably provided in a video display apparatus such as a television receiver or projector and which processes video signals to display three-dimensional video images (3D video images) on a video display surface such as a liquid crystal panel and a projection screen, for example.

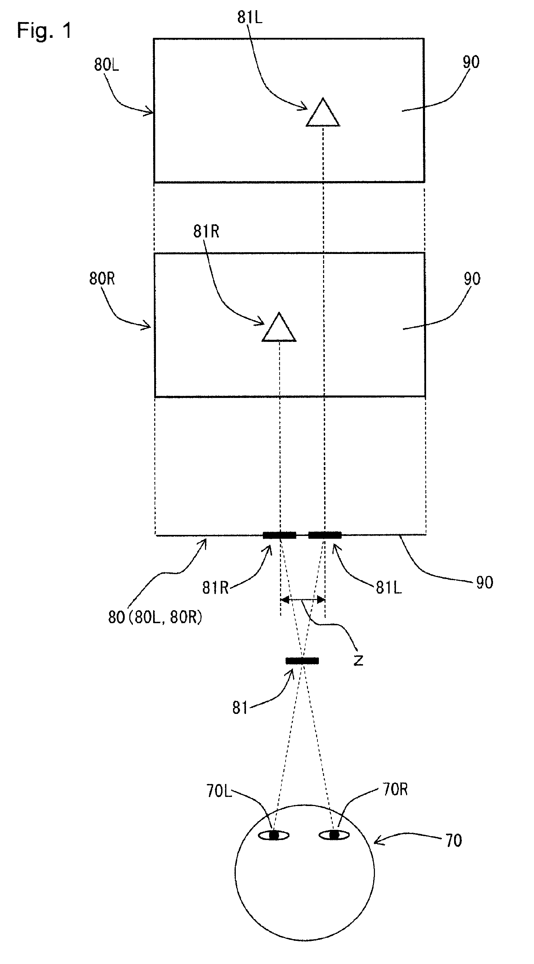

First, three-dimensional video images will be described with reference to FIG. 1. A three-dimensional video image is a video image that is made to appear stereoscopic (made to appear three-dimensional so as to have a sense of depth) to an observer 70 by displaying a left-eye image 80L to be observed by the left eye 70L of the observer 70 and a right-eye image 80R to be observed by the right eye 70R of the observer 70 on a video image display surface 90 and causing the left-eye image 80L and the right-eye image 80R to generate parallax Z. The three-dimensional video image can be taken to be a video image 80 in which the left-eye image 80L and the right-eye image 80R are superimposed. In the example shown in the figure, a left-eye image-displayed object 81L is displayed via the left-eye image 80L, and a right-eye image-displayed object 81R is displayed via the right-eye image 80R, so the observer 70 observes the left-eye image-displayed object 81L and the right-eye image-displayed object 81R as a stereoscopic video image-displayed object 81 (appearing to have a three-dimensional sense of depth).

The parallax Z between the left-eye image 80L and the right-eye image 80R is the difference in the horizontal direction (left-right direction) between the display position of the left-eye image-displayed object 81L via the left-eye image 80L and the display position of the right-eye image-displayed object 81R via the right-eye image 80R. The parallax Z between the left-eye image 80L and the right-eye image 80R is taken to be positive in cases where the left-eye image-displayed object 81L is to the right of the right-eye image-displayed object 81R, while the parallax Z between the left-eye image 80L and the right-eye image 80R is taken to be negative in cases where the left-eye image-displayed object 81L is to the left of the right-eye image-displayed object 81R.

Accordingly, when the parallax Z between the left-eye image 80L and the right-eye image 80R is positive (when the left-eye image-displayed object 81L is to the right of the right-eye image-displayed object 81R), the observer 70 observes as if the stereoscopic video image-displayed object 81 were in front of the video image display surface 90 (so as to appear to jump out). Furthermore, when the parallax Z between the left-eye image 80L and the right-eye image 80R is negative (when the left-eye image-displayed object 81L is to the left of the right-eye image-displayed object 81R), the observer 70 observes as if the stereoscopic video image-displayed object 81 were behind the video image display surface 90. When the parallax Z between the left-eye image 80L and the right-eye image 80R is zero, the observer 70 observes as if the stereoscopic video image-displayed object 81 were on the video image display surface 90. Then, as the parallax Z between the left-eye image 80L and the right-eye image 80R becomes greater, the observer 70 observes as if the stereoscopic video image-displayed object 81 were further in front of the video image display surface 90.

### First Preferred Embodiment

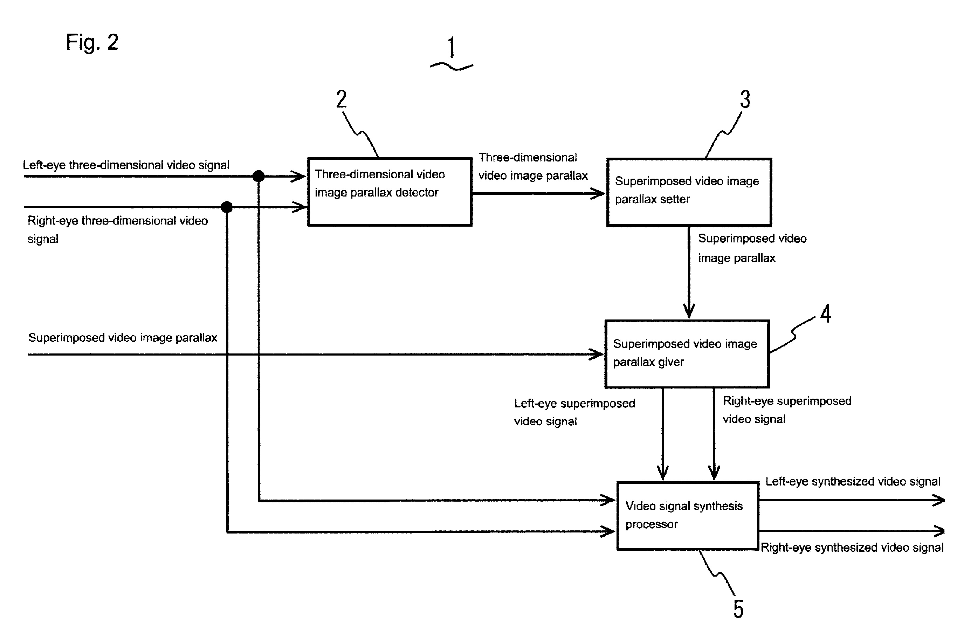

First, the video signal processing apparatus according to a first preferred embodiment will be described. FIG. 2 shows the configuration of the video signal processing apparatus according to the first preferred embodiment. The video signal processing apparatus 1 preferably includes a three-dimensional video image parallax detector 2, a superimposed video image parallax setter 3, a superimposed video image parallax giver 4, and a video signal synthesis processor 5.

From a left-eye three-dimensional video signal and a right-eye three-dimensional video signal, the three-dimensional video image parallax detector 2 detects the parallax between the left-eye image and the right-eye image in three-dimensional video images produced from the left-eye and right-eye three-dimensional video signals (the parallax between the left-eye image that is displayed based on the left-eye three-dimensional video signal and the right-eye image that is displayed based on the right-eye three-dimensional video signal). The left-eye three-dimensional video signal is defined as being a video signal to display the left-eye image in a three-dimensional video image. The right-eye three-dimensional video signal is defined as being a video signal to display the right-eye image in a three-dimensional video image.

Specifically, the three-dimensional video image parallax detector 2 accepts input of the left-eye three-dimensional video signal and the right-eye three-dimensional video signal from a video signal source (not shown; e.g., a tuner). Then, from the left-eye and right-eye three-dimensional video signals thus input, the three-dimensional video image parallax detector 2 detects the parallax between the left-eye image and the right-eye image in three-dimensional video images produced from the left-eye and right-eye three-dimensional video signals provided as an input. The parallax between the left-eye image and the right-eye image in three-dimensional video images based on the left-eye three-dimensional video signal and right-eye three-dimensional video signal that are input to the three-dimensional video image parallax detector 2 (the parallax detected by the three-dimensional video image parallax detector 2) is referred to as the three-dimensional video image parallax.

The superimposed video image parallax setter 3 sets the parallax between the left-eye image and the right-eye image in a three-dimensional superimposed video image on the basis of the three-dimensional video image parallax detected by the three-dimensional video image parallax detector 2. A three-dimensional superimposed video image is defined as being a three-dimensional video image relating to a superimposed video image such as a caption display and on-screen display (OSD). That is, a three-dimensional superimposed video image is a superimposed video image that is superimposed upon a three-dimensional video image, and is thus a superimposed video image that is made to appear stereoscopic. Specifically, the three-dimensional superimposed video image is a superimposed video image that is made to appear to the observer to be stereoscopic by displaying the left-eye image and the right-eye image for the superimposed video image and generating parallax between these left-eye and right-eye images for the superimposed video image. The parallax between the left-eye image and the right-eye image in a three-dimensional superimposed video image (the parallax between the left-eye image and the right-eye image for the superimposed video image) is referred to as the superimposed video image parallax. On the basis of the three-dimensional video image parallax detected by the three-dimensional video image parallax detector 2, the superimposed video image parallax setter 3 sets the superimposed video image parallax to a parallax greater than the three-dimensional video image parallax detected by the three-dimensional video image parallax detector 2.

From a superimposed video signal, the superimposed video image parallax giver 4 generates a left-eye superimposed video signal and a right-eye superimposed video signal such that the superimposed video image parallax is the one set by the superimposed video image parallax setter 3. The superimposed video signal is defined as being a video signal to display a superimposed video image. The left-eye superimposed video signal is defined as being a video signal to display the left-eye image in a three-dimensional superimposed video image. The right-eye superimposed video signal is defined as being a video signal to display the right-eye image in a three-dimensional superimposed video image.

To wit, the superimposed video image parallax giver 4 accepts input of a superimposed video signal from a superimposed video signal source (not shown; e.g., a tuner or OSD processor). Then, from this superimposed video signal thus input, the superimposed video image parallax giver 4 generates a left-eye superimposed video signal and a right-eye superimposed video signal so as to have the superimposed video image parallax that is set by the superimposed video image parallax setter 3.

The video signal synthesis processor 5 generates a left-eye synthesized video signal from the left-eye three-dimensional video signal and the left-eye superimposed video signal and also generates a right-eye synthesized video signal from the right-eye three-dimensional video signal and the right-eye superimposed video signal. The left-eye synthesized video signal is defined as being a video signal generated by synthesizing the left-eye three-dimensional video signal and the left-eye superimposed video signal, being a video signal to display video images generated by synthesizing the left-eye images based on the left-eye three-dimensional video signal and the left-eye images based on the left-eye superimposed video signal. The right-eye synthesized video signal is defined as being a video signal generated by synthesizing the right-eye three-dimensional video signal and the right-eye superimposed video signal, being a video signal to display video images generated by synthesizing the right-eye images based on the right-eye three-dimensional video signal and the right-eye images based on the right-eye superimposed video signal.

Specifically, the video signal synthesis processor 5 accepts input from a video signal source (not shown) of the same left-eye three-dimensional video signal and right-eye three-dimensional video signal as an input to the three-dimensional video image parallax detector 2 and accepts input from the superimposed video image parallax giver 4 of the left-eye superimposed video signal and right-eye superimposed video signal generated by the superimposed video image parallax giver 4. Then, the video signal synthesis processor 5 generates a left-eye synthesized video signal from the left-eye three-dimensional video signal and left-eye superimposed video signal that are provided as an input and generates a right-eye synthesized video signal from the right-eye three-dimensional video signal and right-eye superimposed video signal that are provided as an input.

The left-eye synthesized video signal and right-eye synthesized video signal generated by the video signal synthesis processor 5 are supplied to a video image display processor (not shown), and the three-dimensional video images (left-eye image and right-eye image) based on the left-eye synthesized video signal and right-eye synthesized video signal generated by the video signal synthesis processor 5 are displayed on a video image display surface such as a liquid crystal panel or projection screen, for example.

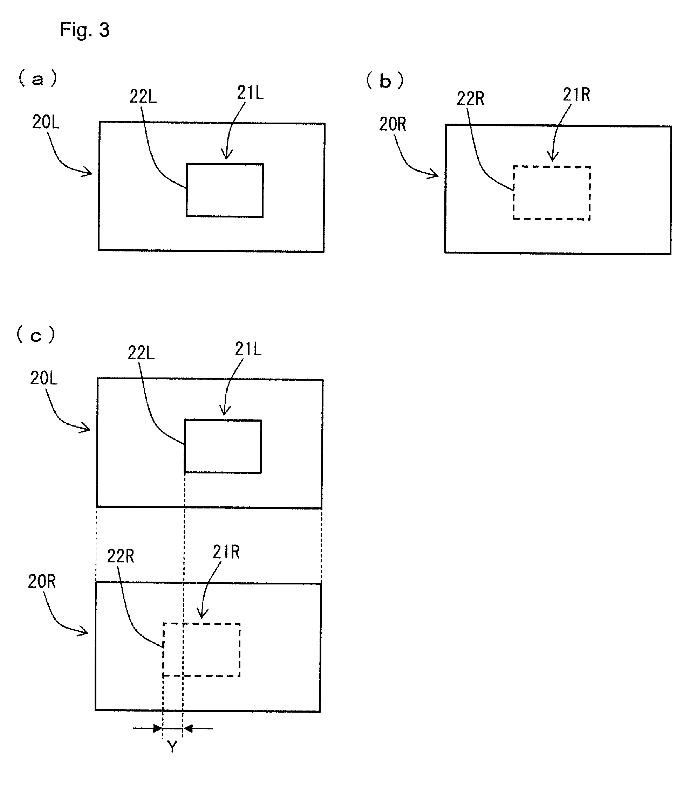

Next, the detection of the three-dimensional video image parallax by the three-dimensional video image parallax detector 2 will be described with reference to FIGS. 3A-3C. The three-dimensional video image parallax detector 2 extracts the contour of the left-eye image and the contour of the right-eye image in three-dimensional video images produced from the left-eye three-dimensional video signal and right-eye three-dimensional video signal and detects the three-dimensional video image parallax on the basis of the offset between these contours.

Specifically, by analyzing the left-eye three-dimensional video signal, the three-dimensional video image parallax detector 2 extracts a left-eye image-displayed object 21L within a left-eye image 20L produced from the left-eye three-dimensional video signal and extracts the contour 22L of the left-eye image-displayed object 21L (FIG. 3A). Moreover, by analyzing the right-eye three-dimensional video signal, the three-dimensional video image parallax detector 2 extracts a right-eye image-displayed object 21R within a right-eye image 20R produced from the right-eye three-dimensional video signal and extracts the contour 22R of the right-eye image-displayed object 21R (FIG. 3B).

Then, the three-dimensional video image parallax detector 2 calculates the offset *Y* between the contour 22L of the left-eye image-displayed object 21L and the contour 22R of the right-eye image-displayed object 21R (FIG. 3C). Specifically, the three-dimensional video image parallax detector 2 calculates the amount of offset in the horizontal direction (left-right direction) between the contour 22L of the left-eye image-displayed object 21L and the contour 22R of the right-eye image-displayed object 21R as the offset *Y* between the contour 22L of the left-eye image-displayed object 21L and the contour 22R of the right-eye image-displayed object 21R. At this time, the offset *Y* between the contour 22L of the left-eye image-displayed object 21L and the contour 22R of the right-eye image-displayed object 21R is taken to be positive in cases where the contour 22L of the image-displayed object 21L is to the right of the contour 22R of the image-displayed object 21R, while the offset *Y* between the contour 22L of the left-eye image-displayed object 21L and the contour 22R of the right-eye image-displayed object 21R is taken to be negative in cases where the contour 22L of the image-displayed object 21L is to the left of the contour 22R of the image-displayed object 21R.

The offset *Y* between the contour 22L of the left-eye image-displayed object 21L and the contour 22R of the right-eye image-displayed object 21R corresponds to the difference in the horizontal direction (left-right direction) between the display position of the left-eye image-displayed object 21L and the display position of the right-eye image-displayed object 21R. That is, the offset *Y* between the contour 22L of the left-eye image-displayed object 21L and the contour 22R of the right-eye image-displayed object 21R corresponds to the three-dimensional video image parallax. Accordingly, the three-dimensional video image parallax detector 2 detects the offset *Y* between the contour 22L of the left-eye image-displayed object 21L and the contour 22R of the right-eye image-displayed object 21R as the three-dimensional video image parallax. Thus, the three-dimensional video image parallax detector 2 detects the three-dimensional video image parallax.

The three-dimensional video image parallax detector 2 detects the three-dimensional video image parallax at a frequency equal to the video image display frame rate (each time a frame is displayed). In addition, in cases where a plurality of image-displayed objects exist within a single video image display frame, the three-dimensional video image parallax detector 2 detects the three-dimensional video image parallax for each of these image-displayed objects. To wit, if a plurality of image-displayed objects exist within a single video image display frame, the three-dimensional video image parallax detector 2 detects a plurality of three-dimensional video image parallaxes, the number of which correspond to the number of the plurality of image-displayed objects.

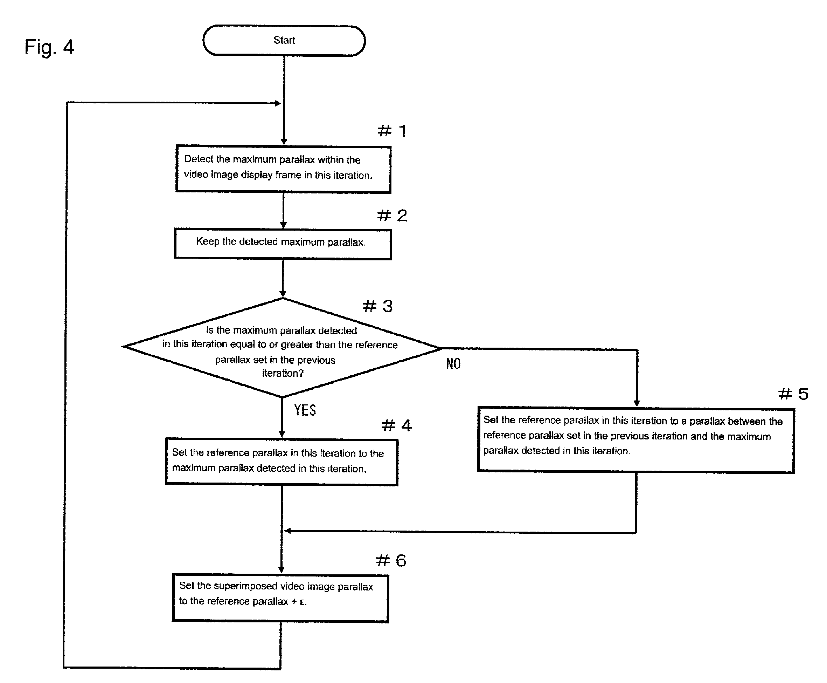

Next, the setting of the superimposed video image parallax by the superimposed video image parallax setter 3 will be described with reference to FIG. 4. The superimposed video image parallax setter 3 sets the superimposed video image parallax to a parallax greater than the maximum parallax of the three-dimensional video image parallaxes within a single video image display frame (a time during which a single frame is displayed). Furthermore, in cases where the maximum parallax of the three-dimensional video image parallaxes becomes smaller than the parallax up until then, the superimposed video image parallax setter 3 sets the superimposed video image parallax gradually smaller than the parallax up until then with the passage of time. That is, the superimposed video image parallax is made smaller than the superimposed video image parallax up until then by subjecting it to a temporal filtering process.

To wit, the superimposed video image parallax setter 3 first detects, of the three-dimensional video image parallaxes detected by the three-dimensional video image parallax detector 2, the maximum parallax within the current video image display frame (#1). Specifically, if the three-dimensional video image parallax detector 2 has detected a single three-dimensional video image parallax (the three-dimensional video image parallax regarding a single image-displayed object) within the current video image display frame, then the superimposed video image parallax setter 3 sets this three-dimensional video image parallax as the maximum parallax within the current video image display frame. Moreover, if the three-dimensional video image parallax detector 2 has detected two or more three-dimensional video image parallaxes (three-dimensional video image parallaxes regarding two or more image-displayed objects) within the current video image display frame, then the superimposed video image parallax setter 3 sets the largest of these two or more three-dimensional video image parallaxes as the maximum parallax within the current video image display frame. Then, the superimposed video image parallax setter 3 keeps the maximum parallax detected in this iteration (#2).

Next, if the maximum parallax detected in this iteration is greater than or equal to the reference parallax set in the previous iteration (YES in #3), then the superimposed video image parallax setter 3 sets the reference parallax in this iteration to the maximum parallax detected in this iteration (#4).

On the other hand, if the maximum parallax detected in this iteration is smaller than the reference parallax set in the previous iteration (NO in #3), then the superimposed video image parallax setter 3 sets the reference parallax in this iteration to a parallax between the reference parallax set in the previous iteration and the maximum parallax detected in this iteration (a parallax smaller than the reference parallax set in the previous iteration but greater than the maximum parallax detected in this iteration) (#5). At this time, the superimposed video image parallax setter 3 may, for example, set the reference parallax in this iteration to a parallax determined by subtracting from the reference parallax set in the previous iteration a quantity equal to 1/2 of the difference between the reference parallax set in the previous iteration and the maximum parallax detected in this iteration.

Then, the superimposed video image parallax setter 3 sets the superimposed video image parallax to the reference parallax + ε (where ε is a predetermined value such that 0 < ε), i.e., a parallax greater than the reference parallax by ε (#6). The reference parallax is either equal to the maximum parallax detected in this iteration (via #4) or greater than the maximum parallax detected in this iteration (via #5), so the superimposed video image parallax which is the reference parallax + ε is a parallax greater than the maximum parallax detected in this iteration. In addition, in a case in which the maximum parallax among the three-dimensional video image parallaxes becomes smaller than the parallax up until then, the processing of #1 through #6 via the processing of #5 will be repeated from that point on, so the superimposed video image parallax will become gradually smaller than the parallax up until then with the passage of time. Thus, the superimposed video image parallax setter 3 sets the superimposed video image parallax.

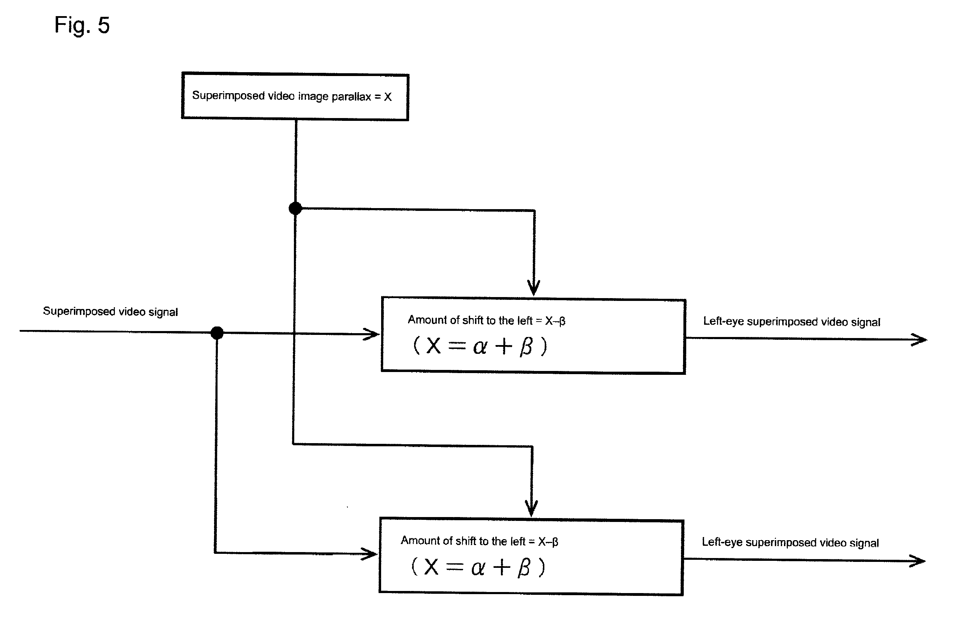

Next, the generation of the left-eye superimposed video signal and right-eye superimposed video signal by the superimposed video image parallax giver 4 will be described with reference to FIG. 5. The superimposed video image parallax giver 4 generates the left-eye superimposed video signal and right-eye superimposed video signal by allocating the superimposed video image parallax that is set by the superimposed video image parallax setter 3 at a certain ratio between the left-eye image and the right-eye image in the three-dimensional superimposed video image.

Specifically, the superimposed video image parallax giver 4 takes the superimposed video image parallax to be *X* and generates from the superimposed video signal a left-eye superimposed video signal in which the amount of shift of the left-eye superimposed video image to the right is *X*-α and a right-eye superimposed video signal in which the amount of shift of the right-eye superimposed video image to the left is *X-*β. The amount of shift of the left-eye superimposed video image to the right is defined as being the display position of the left-eye superimposed video image with respect to the original display position of the superimposed video image (the display position of the superimposed video image when the video image based on the superimposed video signal is displayed "as is"), while the amount of shift of the right-eye superimposed video image to the left is defined as being the display position of the right-eye superimposed video image with respect to the original display position of the superimposed video image. The values α and β satisfy the equation *X* = α + β*,* so the sum of the amount of shift of the left-eye superimposed video image to the right *X-*α and the amount of shift of the right-eye superimposed video image to the left *X*-β is the superimposed video image parallax *X*. In the present preferred embodiment, α = 0.5 × *X* and β = 0.5 × *X*.

To wit, the superimposed video image parallax giver 4 generates the left-eye superimposed video signal and right-eye superimposed video signal from the superimposed video signal such that the amount of shift of the left-eye superimposed video image to the right is *X*-α and such that the amount of shift of the right-eye superimposed video image to the left is *X*-β. The superimposed video image parallax giver 4 thus generates the left-eye superimposed video signal and right-eye superimposed video signal.

With the video signal processing apparatus 1 of the present preferred embodiment, the left-eye image and the right-eye image in a three-dimensional superimposed video image superimposed upon three-dimensional video images are displayed so as to have a parallax greater than the parallax between the left-eye image and the right-eye image in the three-dimensional video images. Accordingly, the three-dimensional superimposed video image is displayed so as to appear to jump out in front of the three-dimensional video images. Consequently, it is possible to prevent the three-dimensional superimposed video image from being buried in the three-dimensional video images, thus making it possible to prevent it from giving a sense of incongruity to observers of the video images.

### Second Preferred Embodiment

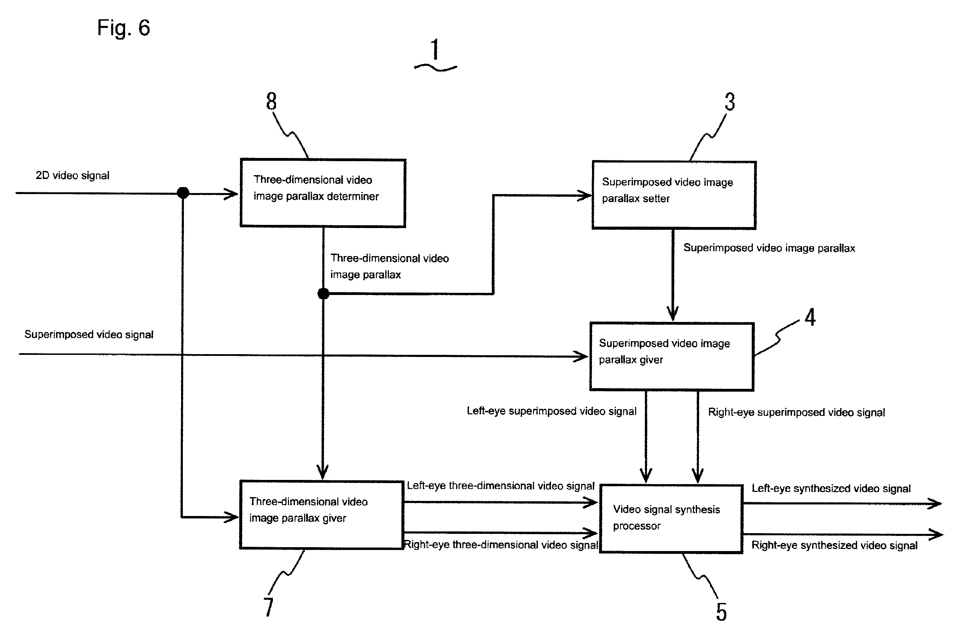

Next, the video signal processing apparatus according to a second preferred embodiment will be described. FIG. 6 shows the configuration of the video signal processing apparatus according to the second preferred embodiment. The video signal processing apparatus 1 preferably includes a three-dimensional video image parallax giver 7, a three-dimensional video image parallax determiner 8, the superimposed video image parallax setter 3, the superimposed video image parallax giver 4, and the video signal synthesis processor 5.

The three-dimensional video image parallax giver 7 generates a left-eye three-dimensional video signal and a right-eye three-dimensional video signal from a 2D video signal (a video signal to display a 2D video image). Specifically, the three-dimensional video image parallax giver 7 accepts input of the 2D video signal from a video signal source (not shown; e.g., tuner). Then, the three-dimensional video image parallax giver 7 generates the left-eye three-dimensional video signal and the right-eye three-dimensional video signal from this input video signal.

When the left-eye three-dimensional video signal and the right-eye three-dimensional video signal are generated from the 2D video signal by the three-dimensional video image parallax giver 7, the three-dimensional video image parallax determiner 8 determines, on the basis of the 2D video signal, the parallax between the left-eye image and the right-eye image in three-dimensional video images produced from these left-eye and right-eye three-dimensional video signals (the parallax between the left-eye image displayed based on the left-eye three-dimensional video signal generated by the three-dimensional video image parallax giver 7 and the right-eye image displayed based on the right-eye three-dimensional video signal generated by the three-dimensional video image parallax giver 7).

Specifically, the three-dimensional video image parallax determiner 8 accepts input of the 2D video signal (the same video signal as the one input to the three-dimensional video image parallax giver 7) from a video signal source (not shown). Then, the three-dimensional video image parallax determiner 8 determines, on the basis of this input 2D video signal, the parallax between the left-eye image and the right-eye image in the three-dimensional video images produced from the left-eye three-dimensional video signal and the right-eye three-dimensional video signal at the time of the generation of these left-eye and right-eye three-dimensional video signals from the 2D video signal by the three-dimensional video image parallax giver 7. The parallax between the left-eye image and the right-eye image in the three-dimensional video images based on the left-eye three-dimensional video signal and right-eye three-dimensional video signal that are generated by the three-dimensional video image parallax giver 7 (the parallax determined by the three-dimensional video image parallax determiner 8) is referred to as the three-dimensional video image parallax.

The three-dimensional video image parallax determiner 8 analyzes the input video signal, detects any moving image-displayed objects, for example, and the speed of movement of such moving image-displayed objects, and determines the three-dimensional video image parallaxes so as to generate parallax for moving image-displayed objects and also so as to generate a greater parallax the greater the speed of movement of the moving image-displayed objects. The three-dimensional video image parallax giver 7 generates a left-eye three-dimensional video signal and a right-eye three-dimensional video signal from the input 2D video signal such that the three-dimensional video image parallaxes are determined by the three-dimensional video image parallax determiner 8.

Unlike the first preferred embodiment, the superimposed video image parallax setter 3 sets the superimposed video image parallax to a parallax greater than the three-dimensional video image parallax determined by the three-dimensional video image parallax determiner 8 on the basis of the three-dimensional video image parallax determined by the three-dimensional video image parallax determiner 8.

As in the first preferred embodiment, the superimposed video image parallax giver 4 generates a left-eye superimposed video signal and a right-eye superimposed video signal from the superimposed video signal such that the superimposed video image parallax is the one set by the superimposed video image parallax setter 3.

Unlike the first preferred embodiment, the video signal synthesis processor 5 accepts input from the three-dimensional video image parallax giver 7 of the left-eye three-dimensional video signal and right-eye three-dimensional video signal that are generated by the three-dimensional video image parallax giver 7 and accepts input from the superimposed video image parallax giver 4 of the left-eye superimposed video signal and the right-eye superimposed video signal that are generated by the superimposed video image parallax giver 4. Then, the video signal synthesis processor 5 generates a left-eye synthesized video signal from the left-eye three-dimensional video signal and left-eye superimposed video signal provided as an input and generates a right-eye synthesized video signal from the right-eye three-dimensional video signal and right-eye superimposed video signal provided as an input.

As in the first preferred embodiment, the left-eye synthesized video signal and right-eye synthesized video signal generated by the video signal synthesis processor 5 are supplied to a video image display processor (not shown), and the three-dimensional video images (left-eye image and right-eye image) based on the left-eye synthesized video signal and right-eye synthesized video signal generated by the video signal synthesis processor 5 are displayed on a video image display surface such as a liquid crystal panel or projection screen, for example.

With the video signal processing apparatus 1 of the present preferred embodiment, as in the first preferred embodiment, three-dimensional superimposed video images are displayed so as to appear to jump out in front of the three-dimensional video images. Therefore, the three-dimensional superimposed video images are prevented from being buried in the three-dimensional video images, which makes it possible to avoid giving a sense of incongruity to observers of the video images.

### Third Preferred Embodiment

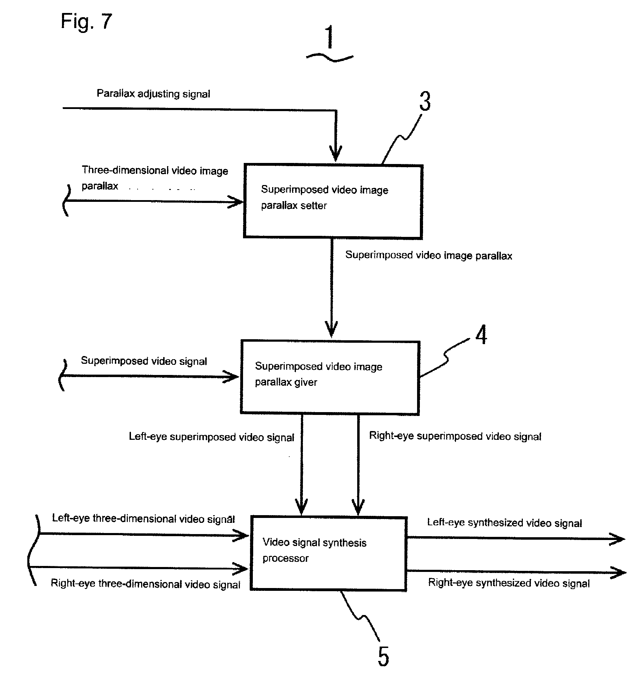

Next, the video signal processing apparatus according to a third preferred embodiment will be described. FIG. 7 shows the configuration of principal portions of the video signal processing apparatus according to the third preferred embodiment. The video signal processing apparatus 1 of the present preferred embodiment differs from that of the first preferred embodiment or the second preferred embodiment in the configuration of the superimposed video image parallax setter 3. The remaining configuration in the present preferred embodiment is the same as that of the first preferred embodiment or the second preferred embodiment.

In the present preferred embodiment, the superimposed video image parallax setter 3 sets the superimposed video image parallax to a parallax greater than the three-dimensional video image parallax (a parallax greater than the maximum parallax of the three-dimensional video image parallaxes within a single video image display frame), and in addition, increases or decreases the superimposed video image parallax in accordance with the operation of a control unit (not shown; e.g., a remote controller operated by an observer of the video images).

Specifically, the superimposed video image parallax setter 3 is provided with an input of a parallax adjusting signal which indicates that the superimposed video image parallax is to be increased or decreased in accordance with the operation of a control unit. Specifically, each time the control unit is operated so as to increase the superimposed video image parallax (e.g., each time the "+" button on the remote controller is pressed), a signal indicating this operation is provided as an input to the superimposed video image parallax setter 3 as a parallax adjusting signal which indicates that the superimposed video image parallax is to be increased. Furthermore, each time the control unit is operated so as to decrease the superimposed video image parallax (e.g., each time the "-" button on the remote controller is pressed), a signal indicating this operation is provided as an input to the superimposed video image parallax setter 3 as a parallax adjusting signal which indicates that the superimposed video image parallax is to be decreased.

Then, in accordance with the parallax adjusting signal thus input, the superimposed video image parallax setter 3 increases or decreases the value of ε in #6 of FIG. 4 described above over the range 0 < ε. By increasing the value of ε, the superimposed video image parallax is increased, and by decreasing the value of ε, the superimposed video image parallax is decreased. To wit, each time a parallax adjusting signal which indicates that the superimposed video image parallax is to be increased is provided as an input (each time an operation to increase the superimposed video image parallax is performed with the control unit), the superimposed video image parallax setter 3 increases the value of ε by a stipulated value Δ. Moreover, each time a parallax adjusting signal which indicates that the superimposed video image parallax is to be decreased is provided as an input (each time an operation to decrease the superimposed video image parallax is performed with the control unit), the superimposed video image parallax setter 3 decreases the value of ε by a stipulated value Δ (this is provided, however, over the range 0 < ε).

As in the first preferred embodiment or the second preferred embodiment, the superimposed video image parallax giver 4 generates a left-eye superimposed video signal and a right-eye superimposed video signal from the superimposed video signal such that the superimposed video image parallax is the one set by the superimposed video image parallax setter 3.

As in the first preferred embodiment or the second preferred embodiment, the video signal synthesis processor 5 generates a left-eye synthesized video signal from the left-eye three-dimensional video signal and the left-eye superimposed video signal and generates a right-eye synthesized video signal from the right-eye three-dimensional video signal and the right-eye superimposed video signal.

The left-eye synthesized video signal and right-eye synthesized video signal generated by the video signal synthesis processor 5 are supplied to a video image display processor (not shown), and the three-dimensional video images (left-eye image and right-eye image) based on the left-eye synthesized video signal and right-eye synthesized video signal generated by the video signal synthesis processor 5 are displayed on a video image display surface such as a liquid crystal panel or projection screen as in the first preferred embodiment or the second preferred embodiment.

With the video signal processing apparatus 1 of the present preferred embodiment, as in the first preferred embodiment or the second preferred embodiment, the three-dimensional superimposed video images are displayed so as to appear to jump out in front of the three-dimensional video images. Therefore, it is possible to prevent the three-dimensional superimposed video images from being buried in the three-dimensional video images, thus making it possible to avoid giving a sense of incongruity to observers of the video images.

In addition, with the video signal processing apparatus 1 of the present preferred embodiment, when the control unit is operated so as to increase or decrease the superimposed video image parallax, the superimposed video image parallax is adjusted so as to adjust the degree by which the three-dimensional superimposed video images appear to jump out in front of the three-dimensional video images. Accordingly, by operating the control unit, the observer of video images can arbitrarily adjust the degree by which the three-dimensional superimposed video images appear to jump out in front of the three-dimensional video images.

### Fourth Preferred Embodiment

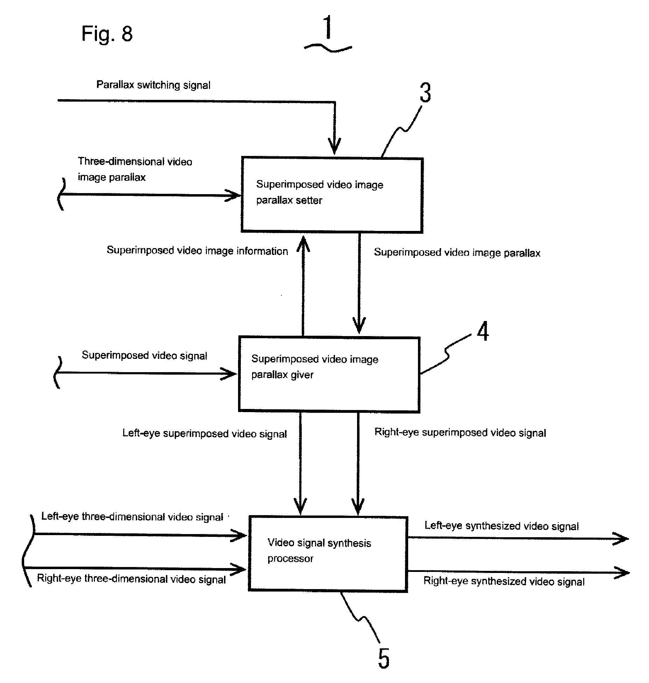

Next, the video signal processing apparatus according to a fourth preferred embodiment will be described. FIG. 8 shows the configuration of principal portions of the video signal processing apparatus according to the fourth preferred embodiment. The video signal processing apparatus 1 of the present preferred embodiment differs from that of the first preferred embodiment or the second preferred embodiment in the configurations of the superimposed video image parallax setter 3 and superimposed video image parallax giver 4. The remaining configuration in the present preferred embodiment is preferably the same as that of the first preferred embodiment or the second preferred embodiment.

In the present preferred embodiment, the superimposed video image parallax setter 3 sets the superimposed video image parallax to a parallax greater than the three-dimensional video image parallax (a parallax greater than the maximum parallax of the three-dimensional video image parallaxes within a single video image display frame), and in addition, in a case in which a plurality of three-dimensional superimposed video images are displayed, it sets the superimposed video image parallax of each of these plurality of three-dimensional superimposed video images to a different parallax for each three-dimensional superimposed video image (each different from the other three-dimensional superimposed video images).

Specifically, in #6 of FIG. 4 described above, the superimposed video image parallax setter 3 sets the superimposed video image parallaxes *Xᵢ* (*i* = 1, 2, ..., *n*) to the reference parallax + ε*ᵢ* (0 < ε₁, ε₂, ..., ε*ₙ*; ε₁ ≠ ε₂ ≠ ... ≠ ε*ₙ*). Specifically, the superimposed video image parallax setter 3 sets the superimposed video image parallax *X*₁ to the reference parallax + ε₁, the superimposed video image parallax *X*₂ to the reference parallax + ε₂, ..., the superimposed video image parallax *Xₙ* to the reference parallax + ε*ₙ*, thus setting a plurality of different superimposed video image parallaxes *X*₁, *X*₂, ..., *Xₙ* (*X*₁ ≠ *X*₂ ≠ ... ≠ *Xₙ*).

Here, the superimposed video image parallax *Xᵢ* is the superimposed video image parallax set for the *i*^{th} three-dimensional superimposed video image, taking the *i*^{th}-displayed three-dimensional superimposed video image to be the *i*^{th} three-dimensional superimposed video image. Note that the 1^{st}-displayed 1^{st} three-dimensional superimposed video image is defined as being the three-dimensional superimposed video image that is first displayed in the state in which no three-dimensional superimposed video images at all are displayed, while the 2^{nd}-displayed 2^{nd} three-dimensional superimposed video image is defined as being the three-dimensional superimposed video image that is additionally displayed in the state in which exactly one three-dimensional superimposed video image is displayed, ..., and the *n*^{th}-displayed *n*^{th} three-dimensional superimposed video image is defined as being the three-dimensional superimposed video image that is additionally displayed in the state in which exactly n-1 three-dimensional superimposed video images are displayed.

Specifically, the superimposed video image parallax setter 3 sets the superimposed video image parallax *X*₁ = reference parallax + ε₁ for the 1^{st}-displayed 1^{st} three-dimensional superimposed video image, sets the superimposed video image parallax *X*₂ = reference parallax + ε₂ for the 2^{nd}-displayed 2^{nd} three-dimensional superimposed video image, ..., and sets the superimposed video image parallax *Xₙ* = reference parallax + ε*ₙ* for the *n*^{th}-displayed *n*^{th} three-dimensional superimposed video image.

By analyzing the superimposed video signal, the superimposed video image parallax giver 4 detects the individual three-dimensional superimposed video images displayed based on the superimposed video signal, and also detects the display positions of these individual three-dimensional superimposed video images, the number of three-dimensional superimposed video images displayed, changes in the number of three-dimensional superimposed video images displayed, and the like. Then, on the basis of the results of this detection, the superimposed video image parallax giver 4 generates a left-eye superimposed video signal and a right-eye superimposed video signal from the superimposed video signal such that the parallax of the *i^{th}* three-dimensional superimposed video image is the superimposed video image parallax *Xᵢ* set by the superimposed video image parallax setter 3. To wit, the superimposed video image parallax giver 4 generates the left-eye superimposed video signal and right-eye superimposed video signal from the superimposed video signal such that, for the *i*^{th} three-dimensional superimposed video image, the amount of shift of the left-eye superimposed video image to the right is *Xᵢ*-α, while the amount of shift of the right-eye superimposed video image to the left is *Xᵢ*-β*.*

That is, the superimposed video image parallax giver 4 generates left-eye superimposed video signals and right-eye superimposed video signals from the superimposed video signals such that, for the 1^{st} three-dimensional superimposed video image, the amount of shift of the left-eye superimposed video image to the right is *X*₁-α and the amount of shift of the right-eye superimposed video image to the left is *X*₁-β, for the 2^{nd} three-dimensional superimposed video image, the amount of shift of the left-eye superimposed video image to the right is *X*₂-α and the amount of shift of the right-eye superimposed video image to the left is *X*₂-β*,* ..., and for the *n*^{th} three-dimensional superimposed video image, the amount of shift of the left-eye superimposed video image to the right is *Xₙ*-α, and the amount of shift of the right-eye superimposed video image to the left is *Xₙ*-β*.*

Furthermore, on the basis of the results of analysis of the superimposed video signals (results of detection of the number of three-dimensional superimposed video images displayed and changes in the number of three-dimensional superimposed video images displayed), the superimposed video image parallax giver 4 provides input of superimposed video image information indicating the number of three-dimensional superimposed video images displayed and changes in the number of three-dimensional superimposed video images displayed to the superimposed video image parallax setter 3.

In the initial state (e.g., at the time of shipping), the superimposed video image parallax setter 3 has the value of ε₁ set to ε₁ = *c*₁, the value of ε₂ set to ε₂ = *c*₂*,* ..., and the value of ε*ₙ* set to ε*ₙ* = *cₙ.* Here, *c*₁, *c*₂, ..., *cₙ* are predetermined values such that 0 < *c*₁ < *c*₂ < ... < *cₙ*. Accordingly, when three-dimensional superimposed images are displayed in the initial state, the superimposed video image parallax setter 3 sets the superimposed video image parallaxes *X*₁, *X*₂, ..., *Xₙ* for the respective ones of the plurality of three-dimensional superimposed video images (1^{st} through *n*^{th} three-dimensional superimposed video images) as follows: specifically, the superimposed video image parallax setter 3 sets the superimposed video image parallax *X*₁ = reference parallax + *c*₁, sets the superimposed video image parallax *X*₂ = reference parallax + *c*₂, ..., and sets the superimposed video image parallax *Xₙ* = reference parallax + *cₙ* (set such that *X*₁ < *X*₂ < ... < *Xₙ*).

Moreover, when three-dimensional superimposed video images are displayed, the superimposed video image parallax setter 3 switches the superimposed video image parallax *Xᵢ* for each of the plurality of three-dimensional superimposed video images to a different parallax from the parallax up until then in response to the operation of a control unit (not shown; e.g., a remote controller that is operated by an observer of the video images).

Specifically, on the basis of the superimposed video image information that is input from the superimposed video image parallax giver 4, the superimposed video image parallax setter 3 determines whether or not three-dimensional superimposed video images are displayed, and if three-dimensional superimposed video images are in fact displayed, the superimposed video image parallax setter 3 determines how many three-dimensional superimposed video images are displayed. In addition, the superimposed video image parallax setter 3 accepts input of a parallax switching signal which indicates that the superimposed video image parallaxes *Xᵢ* are to be switched in accordance with the operation of the control unit. Specifically, when the control unit is operated so as to switch the superimposed video image parallaxes *Xᵢ*, a signal indicating this operation is input to the superimposed video image parallax setter 3 as a parallax switching signal indicating that the superimposed video image parallaxes *Xᵢ* are to be switched. Then, in cases where three-dimensional superimposed video images are displayed, the superimposed video image parallax setter 3 switches the values of ε*ᵢ* from their values up until then to different values depending on the number of three-dimensional superimposed images displayed and the parallax switching signal that is input. By switching the values of ε*ᵢ* from their values up until then to different values, the values of the superimposed video image parallaxes *Xᵢ* = reference parallax + ε*ᵢ* are switched from the parallaxes up until then to different parallaxes.

For example, if three three-dimensional superimposed video images (the 1^{st} three-dimensional superimposed video image, the 2^{nd} three-dimensional superimposed video image, and the 3^{rd} three-dimensional superimposed video image) are displayed, and the values of ε*ᵢ* up until then had been such that ε₁ = *c*₁, ε₂ = *c*₂, and ε₃ = *c*₃, then the superimposed video image parallax setter 3 switches the value of ε₃ from ε₃ = *c*₃ to ε₃ = *c*₂ and the value of ε₂ from ε₂ = *c*₂ to ε₂ = *c*₃. To wit, the superimposed video image parallax setter 3 switches the superimposed video image parallax *X*₃ from *X*₃ = reference parallax + *c*₃ to *X*₃ = reference parallax + *c*₂ and switches the superimposed video image parallax *X*₂ from *X*₂ = reference parallax + *c*₂ to *X*₂ = reference parallax + *c*₃. Accordingly, in this case, where the superimposed video image parallaxes *Xᵢ* had been up until then *X*₁ < *X*₂ < *X*₃, this is switched to *X*₁ < *X*₃ < *X*₂.

Furthermore, for example, if three three-dimensional superimposed video images (the 1^{st} three-dimensional superimposed video image, the 2^{nd} three-dimensional superimposed video image, and the 3^{rd} three-dimensional superimposed video image) are displayed, and the values of ε*ᵢ* up until then had been such that ε₁ = *c*₁, ε₂ = *c*₂, and ε₃ = *c*₃, then the superimposed video image parallax setter 3 switches the value of ε₃ from ε₃ = *c*₃ to ε₃ = *c*₁, switches the value of ε₂ from ε₂ = *c*₂ to ε₂ = *c*₃, and switches the value of ε₁ from ε₁ = *c*₁ to ε₁ = *c*₂. To wit, the superimposed video image parallax setter 3 switches the superimposed video image parallax *X*₃ from *X*₃ = reference parallax + *c*₃ to *X*₃ = reference parallax + *c*₁, switches the superimposed video image parallax *X*₂ from *X*₂ = reference parallax + *c*₂ to *X*₂ = reference parallax + *c*₃, and switches the superimposed video image parallax *X*₁ from *X*₁ = reference parallax + *c*₁ to *X*₁ = reference parallax + *c*₂. Accordingly, in this case, where the superimposed video image parallaxes *Xᵢ* had been up until then *X*₁ < *X*₂ < *X*₃*,* this is switched to *X*₃ < *X*₁ < *X*₂.

Moreover, if the state changes from one in which one or more three-dimensional superimposed video images are displayed to one in which none are displayed, then the superimposed video image parallax setter 3 returns the superimposed video image parallax *Xᵢ* for each of the plurality of three-dimensional superimposed video images to the initial parallax.

Specifically, on the basis of the superimposed video image information that is input from the superimposed video image parallax giver 4, the superimposed video image parallax setter 3 determines whether or not the state has changed from one in which one or more three-dimensional superimposed video images are displayed to one in which none are displayed. Then, if the state has changed from one in which one or more three-dimensional superimposed video images are displayed to one in which none are displayed, then the superimposed video image parallax setter 3 returns the values of ε*ᵢ* from their values up until then to the initial values. Specifically, the superimposed video image parallax setter 3 returns the value of ε₁ to ε₁ = *c*₁, the value of ε₂ to ε₂ = *c*₂, ..., and the value of ε*ₙ* to ε*ₙ* = *cₙ*. Accordingly, when three-dimensional superimposed video images are displayed again thereafter, the superimposed video image parallax setter 3 sets the superimposed video image parallax *X*₁ to *X*₁ = reference parallax + *c*₁, the superimposed video image parallax *X*₂ to *X*₂ = reference parallax + *c*₂, ..., and the superimposed video image parallax *Xₙ* to *Xₙ* = reference parallax + *cₙ* (thus setting *X*₁ < *X*₂ < ... *X*ₙ).

As in the first preferred embodiment or the second preferred embodiment, the video signal synthesis processor 5 generates a left-eye synthesized video signal from the left-eye three-dimensional video signal and left-eye superimposed video signal that are provided as an input and generates a right-eye synthesized video signal from the right-eye three-dimensional video signal and right-eye superimposed video signal that are provided as an input.

As in the first preferred embodiment or the second preferred embodiment, the left-eye synthesized video signal and right-eye synthesized video signal generated by the video signal synthesis processor 5 are supplied to a video image display processor (not shown), and the three-dimensional video images (left-eye image and right-eye image) based on the left-eye synthesized video signal and right-eye synthesized video signal generated by the video signal synthesis processor 5 are displayed on a video image display surface such as a liquid crystal panel or projection screen, for example.

With the video signal processing apparatus 1 of the present preferred embodiment, as in the first preferred embodiment or the second preferred embodiment, three-dimensional superimposed video images are displayed so as to appear to jump out in front of three-dimensional video images. Therefore, it is possible to prevent the three-dimensional superimposed video images from being buried in the three-dimensional video images, thus making it possible to avoid giving a sense of incongruity to observers of the video images.

In addition, with the video signal processing apparatus 1 according to the present preferred embodiment, in cases where a plurality of three-dimensional superimposed video images are displayed, the superimposed video image parallaxes for such a plurality of three-dimensional superimposed video images are set to parallaxes each different from those of the other three-dimensional superimposed video images. If a plurality of three-dimensional superimposed video images are displayed, each of these plurality of three-dimensional superimposed video images is displayed so as to appear to jump out in front by a different degree.

At this time, if the state changes from one in which no three-dimensional superimposed video images are displayed to one in which a plurality of three-dimensional superimposed video images are displayed, then the superimposed video image parallaxes of the plurality of three-dimensional superimposed video images are set to parallaxes that increase from small to large in the order that these three-dimensional superimposed video images are displayed, and the superimposed video image parallax of the three-dimensional superimposed video image displayed most recently is set to the greatest parallax. That is, in cases where a plurality of three-dimensional superimposed video images are displayed from the state in which no three-dimensional superimposed video images are displayed, such a plurality of three-dimensional superimposed video images are displayed so as to appear from back to front in the order of display thereof, and the three-dimensional superimposed video image displayed most recently is displayed so as to appear closest to the front.

In addition, when a plurality of three-dimensional superimposed video images are displayed, if the control unit is operated so as to switch the superimposed video image parallaxes, the superimposed video image parallaxes for the plurality of three-dimensional superimposed video images are switched, thus switching the order in which the plurality of three-dimensional superimposed video images appear in front. Accordingly, an observer of video images can arbitrarily switch the order in which the plurality of three-dimensional superimposed video images appear in front by operating the control unit while the plurality of three-dimensional superimposed video images are being displayed.

Note that the present invention is in no way limited to the configuration of each of the preferred embodiments described above, and various modifications are possible. For instance, the three-dimensional video image parallax detector may perform subtraction between the left-eye image and the right-eye image in three-dimensional video images and detect the three-dimensional video image parallax on the basis of the breadth of the interval over which the results of this subtraction are continuously positive or negative values for a stipulated value or more. That is, the breadth of the interval over which the results of the subtraction between the left-eye image and the right-eye image are continuously positive or negative values for a stipulated value or more may be detected as the three-dimensional video image parallax. Furthermore, the three-dimensional video image parallax detector may detect motion vectors between the left-eye image and the right-eye image and detect the three-dimensional video image parallax on the basis of the amount of motion in the horizontal direction exhibited by these detected motion vectors. That is, the amount of motion in the horizontal direction exhibited by the motion vectors detected between the left-eye image and the right-eye image may be detected as the three-dimensional video image parallax.

Moreover, it is also possible to display a three-dimensional superimposed video image so as to appear behind all of the three-dimensional video images. In this case, it is sufficient if the three-dimensional superimposed parallax is set to a parallax smaller than the minimum parallax among the three-dimensional video image parallaxes within a single video image display frame. In this case, furthermore, in order to make the superimposed video image visible, it is sufficient to display the three-dimensional video images so as to appear translucent. By adopting such a configuration, the three-dimensional video images are not obscured by the superimposed video image, and this is more convenient for users that prefer that the three-dimensional video images are not obscured by the superimposed video image.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A video signal processing apparatus comprising:
a superimposed video image parallax setter which sets a parallax between a left-eye image and a right-eye image in a three-dimensional superimposed video image to be superimposed upon three-dimensional video images to a parallax greater than the parallax between the left-eye image and the right-eye image in the three-dimensional video images.

2. The video signal processing apparatus according to claim 1, further comprising a three-dimensional video image parallax detector which detects the parallax between the left-eye image and the right-eye image in the three-dimensional video images from a left-eye three-dimensional video signal to display the left-eye image and a right-eye three-dimensional video signal to display the right-eye image in the three-dimensional video images; and
the superimposed video image parallax setter sets the parallax between the left-eye image and the right-eye image in the three-dimensional superimposed video image to a parallax greater than the parallax between the left-eye image and the right-eye image in the three-dimensional video images detected by the three-dimensional video image parallax detector.

3. The video signal processing apparatus according to claim 1, further comprising:
a three-dimensional video image parallax giver which generates a left-eye three-dimensional video signal to display the left-eye image and a right-eye three-dimensional video signal to display the right-eye image in the three-dimensional video images; and
a three-dimensional video image parallax determiner which determines the parallax between the left-eye image and the right-eye image in the three-dimensional video images when the left-eye three-dimensional video signal and right-eye three-dimensional video signal are generated by the three-dimensional video image parallax giver; wherein
the superimposed video image parallax setter sets the parallax between the left-eye image and the right-eye image in the three-dimensional superimposed video image to a parallax greater than the parallax between the left-eye image and the right-eye image in the three-dimensional video images determined by the three-dimensional video image parallax determiner.

4. The video signal processing apparatus according to claim 2, wherein the three-dimensional video image parallax detector extracts contours of the left-eye image and contours of the right-eye image in the three-dimensional video images and detects the parallax between the left-eye image and the right-eye image in the three-dimensional video images based on an offset between the contours of the left-eye image and the right-eye image.

5. The video signal processing apparatus according to claim 2, wherein the three-dimensional video image parallax detector performs subtraction between the left-eye image and the right-eye image in the three-dimensional video images and detects the parallax between the left-eye image and the right-eye image in the three-dimensional video images based on a breadth of the interval over which results of the subtraction are continuously positive or negative values for a stipulated value or more.

6. The video signal processing apparatus according to claim 2, wherein the three-dimensional video image parallax detector detects motion vectors between the left-eye image and the right-eye image in the three-dimensional video images and detects the parallax between the left-eye image and the right-eye image in the three-dimensional video images based on an amount of motion in a horizontal direction exhibited by the detected motion vectors.

7. The video signal processing apparatus according to claim 1, wherein the superimposed video image parallax setter sets the parallax between the left-eye image and the right-eye image in the three-dimensional superimposed video image to a parallax greater than a maximum parallax between the left-eye image and a right-eye image in the three-dimensional video images within a video image display frame.

8. The video signal processing apparatus according to claim 7, wherein in a case in which the maximum parallax between the left-eye image and the right-eye image in the three-dimensional video images becomes smaller than the parallax up until then, the superimposed video image parallax setter sets the parallax between the left-eye image and the right-eye image in the three-dimensional superimposed video image gradually smaller than the parallax up until then with passage of time.

9. The video signal processing apparatus according to claim 1, wherein the superimposed video image parallax setter increases or decreases the parallax between the left-eye image and the right-eye image in the three-dimensional superimposed video image in accordance with an operation of a control unit.

10. The video signal processing apparatus according to claim 1, wherein in a case of a display of a plurality of the three-dimensional superimposed video images, the superimposed video image parallax setter sets the parallax between the left-eye image and the right-eye image in the three-dimensional superimposed video image for each of the plurality of three-dimensional superimposed video images to a different parallax for each three-dimensional superimposed video image.

11. The video signal processing apparatus according to claim 10, wherein the superimposed video image parallax setter switches the parallax between the left-eye image and the right-eye image in the three-dimensional superimposed video image for each of the plurality of three-dimensional superimposed video images from the parallax up until then to a different parallax in accordance with an operation of a control unit.
